(19) Europäisches Patentamt
European Patent Office
Office européen des brevets

(11) EP 0 936 767 A2

(12) EUROPEAN PATENT APPLICATION

(43) Date of publication:
18.08.1999 Bulletin 1999/33

(51) Int. Cl.$^6$: H04J 13/02, H04B 7/26

(21) Application number: 99102467.0

(22) Date of filing: 09.02.1999

(84) Designated Contracting States:
AT BE CH CY DE DK ES FI FR GB GR IE IT LI LU
MC NL PT SE
Designated Extension States:
AL LT LV MK RO SI

(30) Priority: 10.02.1998 JP 2879198

(71) Applicant: NEC CORPORATION
Tokyo (JP)

(72) Inventor:
Egusa, Ryoichi
c/o NEC Corporation
Tokyo (JP)

(74) Representative:
Glawe, Delfs, Moll & Partner
Patentanwälte
Postfach 26 01 62
80058 München (DE)

(54) **Cellular communication system capable of decreasing degradation of communication quality by undesirable transmission power**

(57) In a cellular communication system using, as a multiple access, both of a code division multiple access where spread spectrum is carried out by using a spreading code and a time division multiplex access where a plurality of communication channels are assigned to time spots into which a time is divided, a base station includes a time division spread code transmission control apparatus which comprises a spreading arrangement (71, 73, 75, 77, 79, 81, 83, 85) for spreading data by using different spreading codes (f(n), $\overline{f(n)}$) in accordance with the presence or absence of data to produce a wide-band signal.

FIG.4

Printed by Xerox (UK) Business Services
2.16.7/3.6

EP 0 936 767 A2

## Description

Background of the Invention:

This invention relates to a cellular communication system such as a digital cellular telephone system and, in particular, to a time division spread code communication system in which spread spectrum is carried out by using a spreading code and a plurality of communication channels are assigned to time slots into which a time is divided.

As is well known in the art, multiple accesses are channel accessing systems when a plurality of station simultaneously carry out communications in the same band. As the multiple accesses, a time division multiple access (TDMA) and a code division multiple access (CDMA) are known in the art. The time division multiple access (TDMA) is a system in which a radio frequency is time divided, a subscriber station is assigned with a particular time slot, and communication is carried out in the assigned time slot.

On the other hand, the code division multiple access (CDMA) carries out spread spectrum communication which assigns to each subscriber station with a spreading code and spreads a spectrum of an information signal by using the spreading code into a sufficient wide band in comparison with an original information bandwidth. In the CDMA system, an original signal is demodulated by correlation detecting a received signal using the spreading code which is similar to that used on transmission. In addition, in this access system, each communication uses the same frequency. Accordingly, a high component ratio for the original signal contained in a total received power is necessary to maintain communication quality in this access system.

A time division spread code communication system is a communication system which combines the CDMA system with the TDMA system and in which spread spectrum is carried out by using a spreading code and a plurality of communication channels are assigned to time slots into which a time is divided. The time division spread code communication system is called a code division multiplexing communication system. In the time division spread code communication system, each base station comprises a time division spread code transmission control apparatus for carrying out transmission control to maintain communication quality.

A conventional time division spread code transmission control apparatus communicates with a mobile station by using a spreading code assigned with the mobile station in question.

Various mobile communication systems related to the present invention are already known. By way of example, Japanese Unexamined Patent Publication of Tokkai No. Hei 8-65,738 or JP-A 8-65,738 discloses a mobile communication method which is capable of reducing the deterioration of communication quality due to the steep fluctuation of propagation loss by shadowing as to incoming channel transmission power control of CDMA system. According to JP-A 8-65,738, radio communication of high quality not interfering mutual communication time can be performed by a CDMA-TDMA/FDD or CDMA-TDMA/TDD system which performs communication by assigning a communicable time slot to each cell and performing code division multiple access using the same frequency as a carrier frequency in an assigned time slot. Moreover, the allocation of the time slot to be used can be performed autonomously by measuring mutual interference with a base station located in the periphery, or measuring interference quantity by directly receiving the outgoing channel base station located in the periphery by each base station. In other words, JP-A 8-65,738 discloses a technique that the time slots to be used are not overlapped each other between adjacent cells.

Japanese Unexamined Patent Publication of Tokkai No. Hei 5-48,520 or JP-A 5-48,520 discloses a mobile communication system which is capable of allowing the system with a large capacity to be immune to narrow band disturbance and to revise a data rate with respect to the radio communication system. According to JP-A 5-48,520, the spread spectrum system is adopted for the radio and when plural data strings are sent with a same carrier while varying spread code patterns, a data string of the same spread code pattern is subjected to time division multiplexing and communication channels are allocated to each slot. Both advantages of immunity of the spread spectrum system to narrow band disturbance and a variable data rate of the time division multiplexing system are utilized by providing a spare time slot to a data string for disturbance avoidance. Thus, many number of communication channels are ensured by a few spread code patterns thereby suppressing the deterioration in the desired wave reception level by other spread code in a same carrier. Furthermore, the movement of the time slot is solved at the reduction in the desired wave reception level by providing the spare time slot.

Japanese Unexamined Patent Publication of Tokkai No. Hei 5-145,470 or JP-A 5-145,470 discloses a multiple access mobile communication system which is capable of increasing number of correlation codes in use by reducing control processing in the large capacity CDMA mobile communication system and simplifying a base station controller and a mobile station control system. According to JP-A 5-145,470, in the cellular mobile communication system employing the code division multiple access (CDMA), a base station of each cell applies sector cell processing to an area of a cell to divide the cell into plural areas and to cover its own area, applies time division multiplex corresponding to the number of sector cells to allocate each time slot to each sector cell, gives numbering sequentially to each sector cell. Sector cells of the same number are in existence in the same direction with respect to each base station. The sequence of the time slots of each sector cell is the same in all the base stations. The transmission reception between the mobile station and the base station are subjected to time division multiplex in the allocated time slot for each sector cell. The communication is made with the mobile station in each sector cell for each sector cell.

Japanese Unexamined Patent Publication of Tokkai No. Hei 8-280,056 or JP-A 8-280,056 discloses a base station device, a mobile radio communication system, and a zone switching method which are capable of simplifying the inter-base station synchronism of a time slot in a CDMA radio communication system of a TDMA system. According to JP-A 8-280,056, delay time difference between the transmission delay time of a first base station and the transmission delay time of a second base station is given to the base station with less delay time as the residence time in the buffer. Moreover, as for the moving range of a mobile station, a time double the frame synchronism shift time of the time slot between the base station located farthest from the mobile station and the base station located closest to the mobile station is provided as guard time. Therefore, a zone switchover control procedure is simplified, and zone switching without hit of communication is performed.

Japanese Unexamined Patent Publication of Tokkai No. Hei 6-318,927 or JP-A 6-318,927 proposes a communication method and its system which are capable of increasing the number of users in a network or a cell. According to JP-A 6-318,927, data is transmitted using a combination of multiplexing use of a CDMA/TDMA or a TDMA/CDMA. A set of complement codes (perfect orthogonal codes or no interaction codes) is used as spreading codes. In order to applying this method to an existing TDMA system or a planned TDMA system, a CDMA part is added thereto, whereby to increase the number of users, spread code CDMA multi-access is used by the above-mentioned method in all time slots of a TDMA frame. To increase capacity of a network or cell requires neither a power control method nor a multi-access interference canceling method.

Japanese Unexamined Patent Publication of Tokkai No. Hei 4-351,130 or JP-A 4-351,130 proposes a multiple access method which capable of unifying an advantage of a TDMA and an advantage of a CDMA. According to JP-A 4-351,130, in a multiple access method for simultaneously exchanging a plurality of data streams among a plurality of subscribers in a transmission system, different data streams are spread by the same spreading series to produce corresponding DSSS signals. On transmission, different DSSS signals are superimposed to obtain a received signal. In a receiver, to detect the different data streams filters the received signal by an inverse filter with respect to a common spreading series. To enable to detect correctly is superimposed so that intervals of the spreading series belonging to the different data streams are temporally shifted to each other by a predetermined minimum value. Especially, it is possible to almost perfectly separate the users without necessity of usual synchronization precision in the TDMA.

However, in prior art, the communication quality still degrades in boundaries of the time slots because of the influence of undesirable transmission power in the manner which will later become clear. In order to avoid effect of degradation of the communication quality by the undesirable transmission power, technique in which guard times are inserted between the time slots is easily thinkable. However, this technique is disadvantageous in that capacity of radio transmission decreases because communication is not carried out at the guard times.

Summary of the Invention:

It is therefore an object of the present invention to provide a time division spread code transmission control apparatus which is capable of decreasing degradation of communication quality by undesirable transmission power.

It is another object of the present invention to provide a time division spread code transmission control apparatus which is capable of improving transmission efficiency by reducing a waste of time due to the guard times.

Other objects of this invention will become clear as the description proceeds.

On describing the gist of an aspect of this invention, it is possible to be understood that a time division spread code transmission control apparatus is for use in a base station for transmitting data to a mobile station laid in a predetermined area assigned by a cellular communication system. The cellular communication system using, as a multiple access, both of a code division multiple access where spread spectrum is carried out by using a spreading code and a time division multiplex access where a plurality of communication channels are assigned to time spots into which a time is divided. According to the aspect of this invention, the time division spread code transmission control apparatus comprises spreading means for spreading data by using different spreading codes in accordance with the presence or absence of data to produce a wide-band signal.

On describing the gist of another aspect of this invention, it is possible to be understood that a method transmits data from a base station to a mobile station laid in a predetermined area assigned by a cellular communication system. The cellular communication system using, as a multiple access, both of a code division multiple access where spread spectrum is carried out by using a spreading code and a time division multiplex access where a plurality of communication channels are assigned to time slots into which a time is divided. According to the aspect of this invention, the afore-understood method comprises the step of spreading, in the mobile station, data by using different spreading codes in accordance with the presence or absence of data to produce a wide-band signal.

On describing the gist of still another aspect of this invention, it is possible to be understood that a cellular communication system includes a base station and a mobile station laid in a predetermined area assigned by the cellular communication system. The base station transmits data to the mobile station. The cellular communication system using, as a multiple access, both of a code division multiple access where spread spectrum is carried out by using a spreading code and a time division multiplex access where a plurality of communication channels are assigned to time slots into which a time is divided. According to the aspect of this invention, in the above-understood cellular communication system, the base station comprises spreading means for spreading data by using different spreading codes in accordance with the presence or absence of data to produce a wide-band signal.

Brief Description of the Drawing:

Fig. 1 is a block diagram of a conventional time division spread code transmission control apparatus;
Fig. 2 is a block diagram of a cellular communication system;
Figs. 3A through 3D are time charts for use in describing operation of the cellular communication system comprising a base station which includes the conventional time division spread code transmission control apparatus illustrated in Fig. 1;
Fig. 4 is a block diagram of a time division spread code transmission control apparatus according to a first embodiment of this invention;
Figs. 5A through 5D are time charts for use in describing operation of the cellular communication system comprising a base station which includes the time division spread code transmission control apparatus illustrated in Fig. 4;
Fig. 6 is a block diagram of a time division spread code transmission control apparatus according to a second embodiment of this invention; and
Figs. 7A through 7D are time charts for use in describing operation of the cellular communication system comprising a base station which includes the time division spread code transmission control apparatus illustrated in Fig. 6.

Description of the Preferred Embodiments:

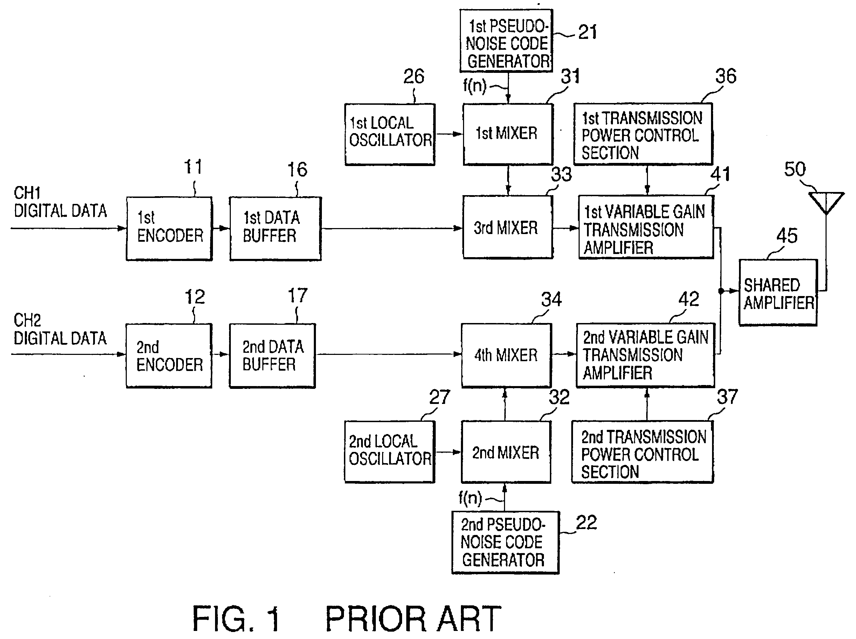

Referring to Fig. 1, a conventional time division spread code transmission control apparatus in a base station will be described at first in order to facilitate an understanding of the present invention. The illustrated time division spread code transmission control apparatus comprises first and second encoders 11 and 12, first and second data buffers 16 and 17, first and second pseudo-noise code generators 21 and 22, first and second local oscillators 26 and 27, first through fourth mixers 31, 32, 33, and 34, first and second transmission power control sections 36 and 37, first and second variable gain transmission amplifiers 41 and 42, a shared amplifier 45, and an antenna 50.

A first digital signal (a first original signal) of a first communication channel is supplied to the first encoder 11. The first digital signal may indicate speech. The first encoder 11 encodes the first digital signal into a first encoded signal. The first encoded signal is supplied to the first data buffer 16. The first buffer 16 buffers the first encoded signal as a first buffered signal. The first buffer 16 produces the first buffered signal in synchronism with a first time slot for the first communication channel. The first time slot is, for example, equal to 0.625 msec. The first buffered signal is supplied to the third mixer 33.

Likewise, a second digital signal (a second original signal) of a second communication channel is supplied to the second encoder 12. The second digital signal may indicate data. In addition, the second digital signal may be used for a different subscriber from that for the first digital signal. The second encoder 12 encodes the second digital signal into a second encoded signal. The second encoded signal is supplied to the second data buffer 17. The second buffer 17 buffers the second encoded signal as a second buffered signal. The second buffer 17 produces the second buffered signal in synchronism with a second time slot for the second communication channel. The second time slot is, for example, equal to 0.625 msec. The second buffered data is supplied to the fourth mixer 34.

On the other hand, the first pseudo-noise code generator 21 generates a first pseudo-noise code as a first spreading code f(n). The first spreading code f(n) is supplied to the first mixer 31. The first local oscillator 26 oscillates a first local carrier signal having a local carrier frequency. The first local carrier signal is supplied to the first mixer 31. The first mixer 31 mixes the first spreading code f(n) with the first local carrier signal to produce a first mixed signal. The first mixed signal is supplied to the third mixer 33.

Similarly, the second pseudo-noise code generator 22 generates a second pseudo-noise code as a second spreading code f(n) which is identical with the first spreading code f(n). The second spreading code is supplied to the second mixer 32. The second local oscillator 27 oscillates a second local carrier signal having the local carrier frequency. The second local carrier signal is supplied to the second mixer 32. The second mixer 32 mixes the second spreading code with the second local carrier signal to produce a second mixed signal. The second mixed signal is supplied to the fourth mixer 34.

The third mixer 33 mixes the first buffered signal with the first mixed signal to produce a third mixed signal as a first wide-band signal having a carrier frequency band. The carrier frequency band has a width, for instance, of 5 MHz. That is, a combination of the first pseudo-noise code generators 21 and the first and the third mixers 31 and 33 serves in cooperation with the first local oscillator 26 as a first modulating arrangement for modulating the first local carrier signal by the first buffered signal to produce the first wide-band signal. In other words, a combination of the first local oscillator 26 and the first and the third mixers 31 and 33 acts in cooperation with the first pseudo-noise code generators 21 as a first code spreading arrangement for spreading the first buffered signal by using the first spreading code f(n) to produce the first wide-band signal.

Likewise, the fourth mixer 34 mixes the second buffered signal with the second mixed signal to produce a fourth mixed signal as a second wide-band signal having the carrier frequency band. That is, a combination of the second pseudo-noise code generators 22 and the second and the fourth mixers 32 and 34 serves in cooperation with the second local oscillator 27 as a second modulating arrangement for modulating the second local carrier signal by the second buffered signal to produce the second wide-band signal. In other words, a combination of the second local oscillator 27 and the second and the fourth mixers 32 and 34 acts in cooperation with the second pseudo-noise code generators 22 as a second code spreading arrangement for spreading the second buffered signal by using the second spreading code f(n) to produce the second wide-band signal.

The first and the second wide-band signals are transmitted on first and second time slots into a time is divided. Accordingly, the first and the second transmission power control sections 36 and 37 control first and second variable gains of the first and the second variable gain transmission amplifiers 41 and 42, respectively, so as to power amplify the first and the second wide-band signals during a transmission time duration alone. At any rate, the first and the second variable gain transmission amplifiers 41 and 42 produce first and second amplified signals which are combined by the shared amplifier 45 into a combined amplified signal transmitted via the antenna 50.

However, the conventional time division spread code transmission control apparatus is disadvantageous in that communication quality degrades in boundaries of the time slots because of the influence of undesirable transmission power.

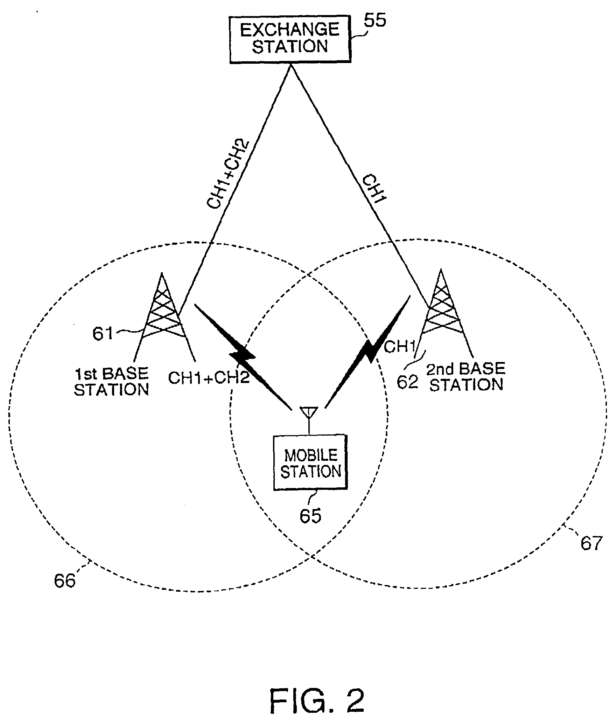

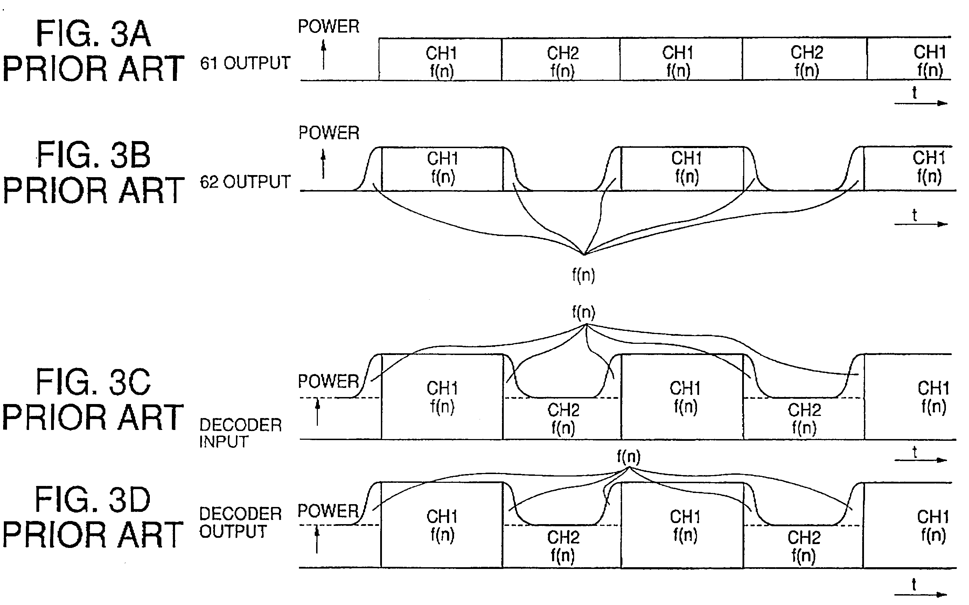

Turning to Fig. 2 and Figs. 3A through 3D, attention will be directed to a cellular communication system to describe such a problem in detail. The illustrated mobile communication system comprises an exchange station 55, first and second base stations 61 and 62, and a plurality of mobile stations (only one mobile station 65 is illustrated in the drawing). In the example being illustrated, although the mobile communication system comprises two base stations 61 and 62, the mobile communication system may comprise three or more base stations.

As is well known in the art, the cellular communication system can carry out soft handoff where the mobile station 65 simultaneously communicates two or more different base stations although the mobile station 65 simultaneously communicates the first and the second base stations 61 and 62 in the example being illustrated in Fig. 2. This is because all base stations communicate using a carrier signal having the same carrier frequency.

In Fig. 2, the first base station 61 covers a first service area or cell 66 while the second base station 62 covers a second service area or cell 67. In addition, the mobile station 65 lies in an area which is overlapped in the first and the second service areas 66 and 67. Under the circumstances, the mobile station 65 can simultaneously communicate with the first and the second base stations 61 and 62. This is the soft handoff or soft handover. Herein, the service area is a receivable area where the mobile station can receives a downward communication channel signal from the base station disposed therein.

It will be assumed that the mobile station 65 receives data on the first communication channel CH1 from the first and the second base stations 61 and 62 and receives data on the second communication channel CH2 from the first base station 61 alone. Under the circumstances, the first base station 61 transmits a transmission signal using both of the first and the second time slots for the first and the second communication channels CH1 and CH2, as shown in Fig. 3A. On the other hand, the second base station 62 transmits a transmission signal using only the first time slot for the first communication channel CH1 and the second base station 62 does not transmit the transmission signal using the second time slot for the second communication channel CH2, as shown in Fig. 3B. Accordingly, the second base station 62 necessitates to stop an output radio wave during the second time slot for the second communication channel CH2.

However, the first variable gain transmission amplifier 41 cannot obtain a gain required to obtain an original transmission output at a time when the first transmission power control section 36 indicates start of amplification. As a result, indication of output start from the first transmission power control section 36 is required to early output by a predetermined time duration. In addition, the first transmission power control section 36 cannot control the first variable gain transmission amplifier 41 with perfectly no gain at a time when the first transmission power control section 36 indicates stop of output. That is, the first variable gain transmission amplifier 41 has a characteristic where the first variable gain gradually increases and decreases at a transition period of the start and the stop. Accordingly, undesirable radio waves occur in the time division spread code transmission control apparatus for a time interval from a time instant of indication of the output start to a time instant where a predetermined gain is obtained and for a time interval from a time instant of indication of the output stop to a time instant where no gain is obtained, as shown in Fig. 3B.

Inasmuch as the undesirable radio waves are transmitted from the second base station 62 via the antenna 50 thereof, the mobile station 65 receives essentially undesirable received power at boundaries of the time slots (in the example being illustrated, leading edges and trailing edges of the second time slots for the second communication channel CH2), as shown in Fig. 3C. In addition, inasmuch as data on the first and the second communication channels CH1 and CH2 are spread using the same spreading code f(n), the mobile station 65 obtains signal power obtained by an inverse spreading with a component of the above-mentioned undesirable radio waves included as a noise component, as shown in Fig. 3D. As a result, a decoder (not shown) in the mobile station 65 has an increased error rate at the boundaries of the time slots.

Furthermore, in prior art, data retransmission control is activated by degradation of the communication quality of the type. Therefore, throughput decreases and it is difficult to avoid degradation of service quality so that noises occur in a reproduced speech.

In addition, in order to avoid effect of degradation of the communication quality by the undesirable transmission power, technique in which guard times are inserted between the time slots is easily thinkable. However, this technique is disadvantageous in that capacity of radio transmission decreases because communication is not carried out at the guard times.

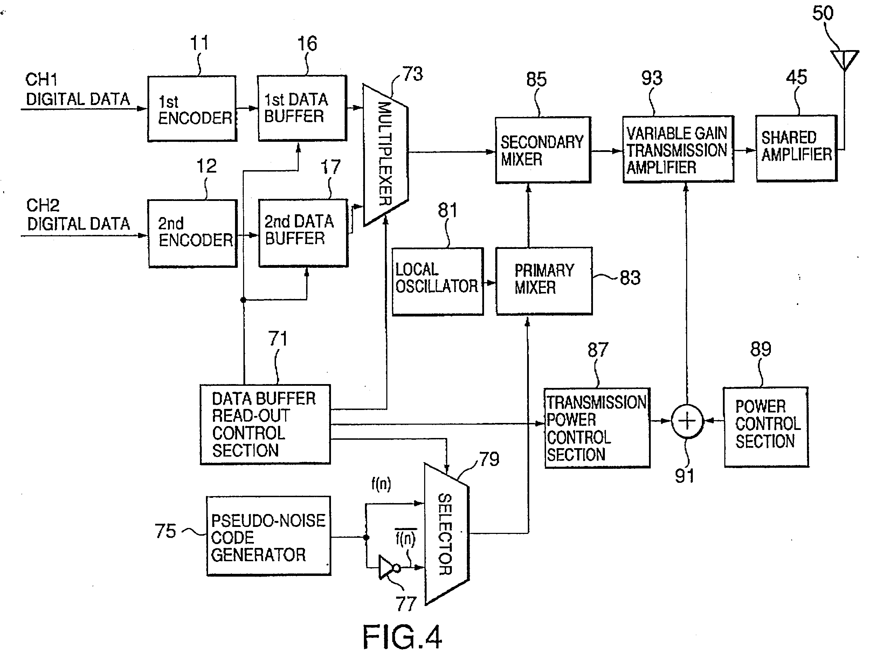

Referring to Fig. 4, the description will proceed to a time division spread code transmission control apparatus according to a first embodiment of this invention. The time division spread code transmission control apparatus comprises similar parts designated by like reference numerals. The time division spread code transmission control apparatus comprises the first and the second encoders 11 and 12, the first and the second data buffers 16 and 17, a data buffer read-out control section 71, a multiplexer 73, a pseudo-noise code generator 75, an inverter 77, a selector 79, a local oscillator 81, a primary mixer 83, a secondary mixer 85, a transmission power control section 87, a power control section 89, an adder 91, a variable gain transmission amplifier 93, the shared amplifier 45, and the antenna 50.

A first digital signal (a first original signal) for a first communication channel CH1 is supplied to the first encoder 11. The first digital signal may indicate speech. Responsive to the first digital signal for the first communication channel CH1, the first encoder 11 encodes the first digital signal into a first encoded signal. The first encoded signal is supplied to the first data buffer 16. The first data buffer 16 buffers the first encoded signal as a first buffered signal.

On the other hand, a second digital signal (a second original signal) for a second communication channel CH2 is supplied to the second encoder 12. The second digital signal may indicate data. Responsive to the second digital signal for the second communication channel CH2, the second encoder 12 encodes the second digital signal into a second encoded signal. The second encoded signal is supplied to the second data buffer 17. The second data buffer 17 buffers the second encoded signal as a second buffered data.

The data buffer read-out control section 71 supplies the first data buffer 16 with a first read-out signal in synchronism with a first time slot corresponding to the first communication channel CH1 and supplies the second data buffer 17 with a second read-out signal in synchronism with a second time slot corresponding to the second communication channel CH2. Each of the first and the second time slots is equal, for example, to 0.625 msec. In addition, the data buffer read-out control section 71 supplies the multiplexer 73 with a first selection signal. Responsive to the first read-out signal, the first data buffer 16 reads the first buffered signal therefrom as a first readout signal. Responsive to the second read-out signal, the second data buffer 17 reads the second buffered signal therefrom as a second readout signal. The first and the second readout signals are supplied to the multiplexer 73. Responsive to the first selection signal, the multiplexer 73 multiplexes the first and the second readout signals into a multiplexed signal. That is, time division multiplexing of the first and the second communication channels CH1 and CH2 is realized by controlling the multiplexer 73 by the data buffer read-out control section 71.

In addition, the data buffer read-out section 71 supplies the selector 79 with a second selection signal in the manner which will become clear as the description proceeds. The data buffer read-out control section 71 controls the transmission power control section 87 in the manner which will become clear as the description proceeds.

The pseudo-noise code generator 75 generates a pseudo-noise code as an original spreading code f(n). That is, the pseudo-noise code generator 75 serves as an original spreading code generator for generating the original spreading code f(n). The original spreading code f(n) is directly supplied to one input terminal of the selector 79 while the original spreading code f(n) is supplied to another input terminal of the selector 79 through the inverter 77. That is, the inverter 77 inverts the original spreading code f(n) to produce an inverted spreading code $\overline{f(n)}$. The inverted spreading code $\overline{f(n)}$ is herein called an additional spreading code. That is, the inverter 77 acts in cooperation with the pseudo-noise generator 75 as an additional spreading code generator for generating the additional spreading code. Preferable, the additional spreading code or the inverted spreading code $\overline{f(n)}$ may be a spreading code which is not assigned to any mobile station. The inverted spreading code $\overline{f(n)}$ is supplied to the other input terminal of the selector 79. The inverted spreading code $\overline{f(n)}$ is orthogonal to the original spreading code f(n). The original spreading code f(n) is called a noninverted spreading code. That is, the pseudo-noise code generator 75 also serves as a noninverted spreading code generator for generating the noninverted spreading code.

The selector 79 selects, in response to the second selection signal, one of the noninverted spreading code f(n) and the inverted spreading code $\overline{f(n)}$ as a selected spreading code. More specifically, the selector 79 selects the noninverted spreading code f(n) as the selected spreading code when the multiplexed data is present. When the multiplexed signal is absent, the selector 79 selects the inverted spreading code $\overline{f(n)}$ as the selected spreading code. At any rate, a combination of the pseudo-noise code generator 75, the inverter 77, and the selector 79 serves in cooperation with the data buffer read-out control section 71 as a spreading code producing arrangement for producing one of the noninverted spreading code and the inverted spreading code as the selected spreading code. The selected spreading code is supplied to the primary mixer 83.

The local oscillator 81 oscillates a local carrier signal having a carrier frequency. The local carrier signal is supplied to the primary mixer 83. The primary mixer 83 mixes the local carrier signal with the selected spreading code to produce a primary mixed signal. The primary mixed signal is supplied to the secondary mixer 85. The secondary mixer 85 is supplied with the multiplexed signal from the multiplexer 73. The secondary mixer 85 mixes the multiplexed signal with the primary mixed signal to produce a secondary mixed signal as a wide-band signal having a carrier frequency band. The carrier frequency band has, for instance, a width of 5 MHz. That is, a combination of the spreading code producing arrangement and the primary and the secondary mixers 83 and 85 serves in cooperation with the local oscillator 81 as a modulating arrangement for modulating the local carrier signal by the multiplexed signal to produce the wide-band signal. In other words, a combination of the local oscillator 81 and the primary and the secondary mixers 83 and 85 acts in cooperation with the spreading code producing arrangement as a code spreading arrangement for spreading the multiplexed signal using the selected spreading code to produce the wide-band signal.

In addition, a combination of the primary and the secondary mixers 83 and 85 is operable as a spreading and modulating arrangement for carrying out spreading and modulating on the multiplexed signal using the selected spreading code produced by the spreading code producing arrangement and using the local carrier signal produced by the local oscillator 81. Furthermore, a combination of the spreading code producing arrangement, the code spreading arrangement, and the multiplexer 73 serves as a spreading arrangement for spreading data by using different spreading codes in accordance with the presence or absence of data to produce the wide-band signal.

The wide-band signal is supplied to the variable gain transmission amplifier 93. The variable gain transmission amplifier 93 is supplied with a variable gain in the manner which will become clear as the description proceeds. The variable gain transmission amplifier 93 amplifies the wide-band signal by the variable gain to produce an amplified signal. The amplified signal is supplied to the shared amplifier 45. The shared amplifier 45 is supplied with other amplified signals from other variable gain transmission amplifiers (not shown). The shared amplifier 45 combines the amplified signal from the variable gain transmission amplifier 93 with the other amplified Signals to produce a combined amplified signal. The combined amplified signal is transmitted via the antenna 50 as a transmission radio wave.

A mobile station (not shown) receives the transmission radio wave as a received signal. The mobile station carries out inverse spread processing on the received signal by using a spreading code obtained by a pseudo-noise code generator (not shown) similar to the pseudo-noise code generator 75 to reproduce the first and the second original signals for the first and the second communication channels CH1 and CH2.

In addition, the data buffer read-out control section 71 carries out the following control as well as the above-mentioned controls for the multiplexer 73 and the selector 79.

That is, the data buffer read-out control section 71 instructs, in synchronism with time instants where the time slots are changed, the transmission power control section 87 to stop an output during data absence when the data buffer read-out control section 71 detects that date to be read out are absent in the first and the second data buffers 16 and 17, thereby the data buffer read-out control section 71 controls the transmission power control section 87 so that the variable gain of the variable gain transmission amplifier 93 has zero. On the other hand, the data buffer read-out control section 71 instructs, in synchronism with time instants where the time slots are changed, the transmission power control section 87 to start the output during data presence when the data buffer read-out control section 71 detects that data to be read out are present in the first and the second data buffers 16 and 17, thereby the data buffer read-out control section 71 controls the transmission power control section 87 so that the variable gain of the variable gain transmission amplifier 93 has a predetermined value.

In addition, the data buffer read-out control section 71 does not carry out, at a time when the time slots are changed, instruction for the transmission power control section 87 when the multiplexed signal disappear or when the multiplexed signal is generated and then the transmission power control section 87 holds the variable gain of a previous state.

In addition, transmission power control for a countermeasure of near-far problem in a CDMA communication system is carried out by the power control section 89. Therefore, the variable gain for the variable gain transmission amplifier 93 is the sum of a gain value indicated by the transmission power control section 87 and the a gain value indicated by the power control section 89. That is, the adder 91 adds the gain value indicated by the transmission power control section 87 and the gain value indicated by the power control section 89 to produce an added value as the variable gain for the variable gain transmission amplifier 93. However, if either indication indicates no gain, the variable gain for the variable gain transmission amplifier 93 is equal to zero.

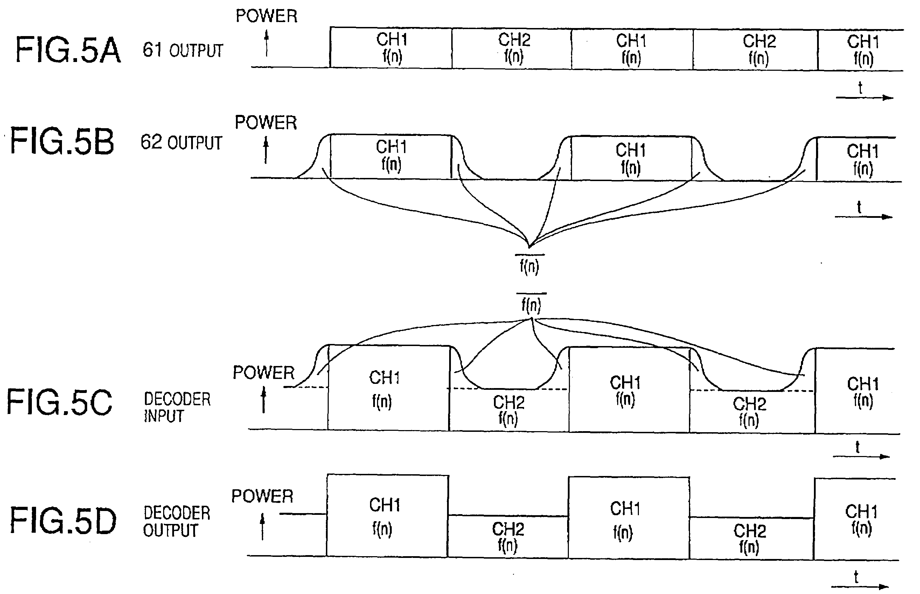

Referring to Figs. 5A through 5D in addition to Figs. 2 and 4, description will be made about operation of the mobile communication system comprising the base stations each including the time division spread code transmission control apparatus illustrated in Fig. 4.

As shown in Fig. 2, the mobile station 65 establishes two communication channels or the first and the second communication channels CH1 and CH2 with the first base station 61. In addition, the mobile station 65 establishes the first communication channel CH1 with the second base station 62.

As shown in Fig. 5A, the first base station 61 transmits a first transmission signal spread by the original spreading code f(n) at both of the first and the second time slots corresponding to the first and the second communication channels CH1 and CH2. This is because data to be transmitted are present in the first and the second time slots corresponding to the first and the second communication channels CH1 and CH2. On the other hand, the second base station 62 transmits a second transmission signal spread by the original spreading code f(n) at the first time slot corresponding to the first communication channel CH1, as shown in Fig. 5B. Inasmuch as date to be transmitted are absent at the second communication channel CH2 in the second base station 62, the variable gain for the variable gain transmission amplifier 93 is set to no gain at the second time slot assigned with the second communication channel CH2 and the selector 79 selects the inverted spreading code $\overline{f(n)}$ as the selected spreading code at the second time slot assigned with the second communication channel CH2, as shown in Fig. 5B.

As shown in Fig. 5C, a decoder (not shown) of the mobile station 65 receives, as total received power, the sum of received power from the first base station 61 and received power from the second base station 62 at reception times for the first time slot corresponding to the first communication channel CH1. On the other hand, the decoder of the mobile station 65 receives, as the total received power, the sum of received power from the first base station 61 and undesirable transmission power produced by the second base station 62 at reception times for the second time slot corresponding to the second communication channel CH1, as shown in Fig. 5C.

The decoder of the mobile station 65 carries out correlation detection by using the original spreading code f(n). Accordingly, the decoder of the mobile station 65 does not produce, as a decoded signal, a component of the undesirable transmission power from the second base station 62 at the second time slot corresponding to the second communication channel CH2. This is because the original or noninverted spreading code f(n) is perfectly orthogonal to the inverted spreading code $\overline{f(n)}$.

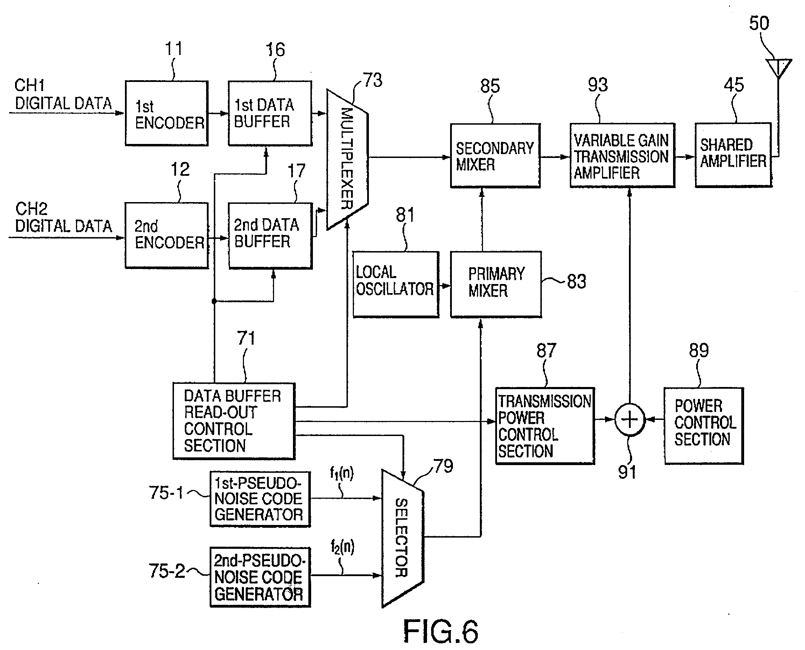

Referring to Fig. 6, the description will proceed to a time division spread code transmission control apparatus according to a second embodiment of this invention. The time division spread code transmission control apparatus is similar in structure and operation to that illustrated in Fig. 4 except that the time division spread code transmission control apparatus comprises first and second pseudo-noise code generators 75-1 and 75-2 in lieu of the pseudo-noise code generator 75 and the inverter 77.

The first pseudo-noise code generator 75-1 generates a first pseudo-noise code as a first spreading code $f_1(n)$. That is, the first pseudo-noise code generator 75-1 serves as a first spreading code generator for generating the first spreading code $f_1(n)$. The first spreading code $f_1(n)$ is identical with the original spreading code f(n) generated by the pseudo-noise code generator 75 (Fig. 4). The second pseudo-noise code generator 75-2 generates a second pseudo-noise code as a second spreading code $f_2(n)$. The second pseudo-noise code generator 75-2 acts as a second spreading code generator for generating the second spreading code $f_2(n)$. The second spreading code $f_2(n)$ is orthogonal or pseudo-orthogonal to the first spreading code $f_1(n)$. Desirably, the second spreading code $f_2(n)$ may be a spreading code which is not assigned to any mobile station.

Responsive to the second selection signal from the date buffer read-out control section 71, the selector 79 selects one of the first and the second spreading codes $f_1(n)$ and $f_2(n)$ as the selected spreading code. The first spreading code $f_1(n)$ is a spreading code used at a time slot when data to be transmitted are present while the second spreading code $f_2(n)$ is a spreading code used at a time slot when data to be transmitted are absent.

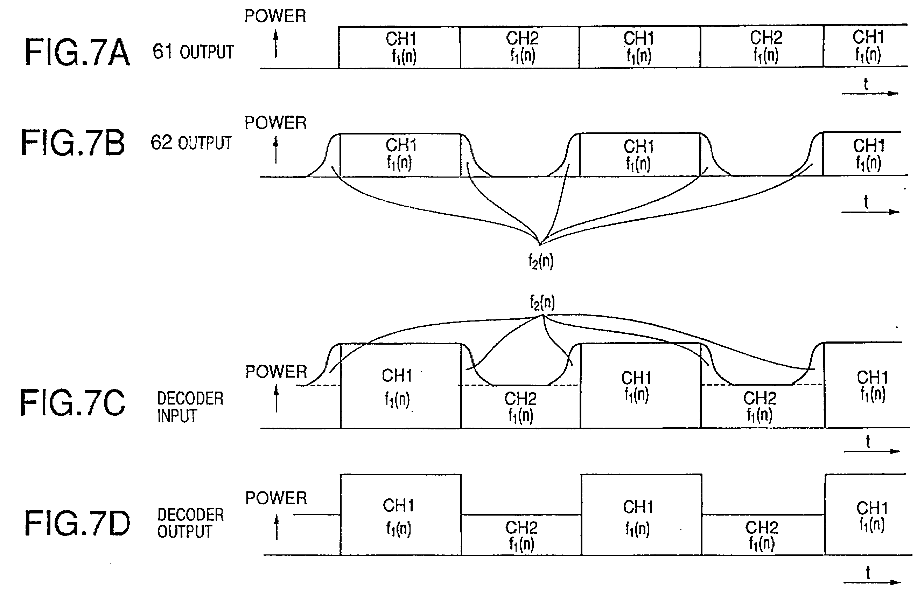

Referring to Figs. 7A through 7D in addition to Figs. 2 and 6, description will be made about operation of the mobile communication system comprising the base stations each including the time division spread code transmission control apparatus illustrated in Fig. 6.

As shown in Fig. 2, the mobile station 65 establishes the first and the second communication channels CH1 and CH2 with the first base station 61. In addition, the mobile station 65 establishes the first communication channel CH1 with the second base station 62.

As shown in Fig. 7A, the first base station 61 transmits a first transmission signal spread by the first spreading code $f_1(n)$ at both of the first and the second time slots corresponding to the first and the second communication channels CH1 and CH2. This is because data to be transmitted are present in the first and the second time slots corresponding to the first and the second communication channels CH1 and CH2. On the other hand, the second base station 62 transmits a second transmission signal spread by the first spreading code $f_1(n)$ at the first time slot corresponding to the first communication channel CH1, as shown in Fig. 7B. Inasmuch as date to be transmitted are absent at the second communication channel CH2 in the second base station 62, the variable gain for the variable gain transmission amplifier 93 is set to no gain at the second time slot assigned with the second communication channel CH2 and the selector 79 selects the second spreading code $f_2(n)$ as the selected spreading code at the second time slot assigned with the second communication channel CH2, as shown in Fig. 7B.

As shown in Fig. 7C, a decoder (not shown) of the mobile station 65 receives, as total received power, the sum of received power from the first base station 61 and received power from the second base station 62 at reception times for the first time slot corresponding to the first communication channel CH1. On the other hand, the decoder of the mobile station 65 receives, as the total received power, the sum of received power from the first base station 61 and undesirable transmission power produced by the second base station 62 at reception times for the second time slot corresponding to the second communication channel CH2, as shown in Fig. 7C.

The decoder of the mobile station 65 carries out correlation detection by using the first spreading code $f_1(n)$. Accordingly, the decoder of the mobile station 65 does not produce, as a decoded signal, a component of the undesirable transmission power from the second base station 62 at the second time slot corresponding to the second communication channel CH2. This is because the first spreading code $f_1(n)$ is orthogonal or pseudo-orthogonal to the second spreading code $f_2(n)$.

While this invention has thus far been described in conjunction with preferred embodiments thereof, it will now be readily possible for those skilled in the art to put this invention into various other manners. For example, each base station may multiplex three or more time slots although the number of the time slots is equal to two in the abovementioned embodiments. In addition, the mobile station may be simultaneously connected to three or more base stations.

**Claims**

1. A time division spread code transmission control apparatus for use in a base station (61, 62) for transmitting data to a mobile station (65) laid in a predetermined area assigned by a cellular communication system, said cellular communication system using, as a multiple access, both of a code division multiple access where spread spectrum is carried out by using a spreading code and a time division multiplex access where a plurality of communication channels are assigned to time spots into which a time is divided, characterized in that said time division spread code transmission control apparatus comprising spreading means (71, 73, 75, 77, 75-1, 75-2, 79, 81, 83, 85) for spreading data by using different spreading codes in accordance with the presence or absence of data to produce a wideband signal.

2. A time division spread code transmission control apparatus as claimed in claim 1, wherein said spreading means spreads data by using an original spreading code ($f(n)$) when data to be transmitted is present, said spreading means spreading data by using an additional spreading code ($\overline{f(n)}$) orthogonal to the original spreading code when data to be transmitted is absent.

3. A time division spread code transmission control apparatus as claimed in claim 2, wherein the additional spreading code ($\overline{f(n)}$) is a code obtained by inverting the original spreading code ($f(n)$).

4. A time division spread code transmission control apparatus as claimed in claim 2, wherein said spreading means comprises:

   spreading code producing means (75, 77, 89) for producing one of the original spreading code and the additional spreading code as a selected spreading code, said spreading code producing means producing the original spreading code as the selected spreading code when data to be transmitted is present, said spreading code producing means producing the additional spreading code as the selected spreading code when data to be transmitted is absent; and
   code spreading means (81, 83, 85), connected to said spreading code producing means, for spreading data by using the selected spreading code to produce the wide-band signal.

5. A time division spread code transmission control apparatus as claimed in claim 4, wherein said spreading means further comprises multiplexing means (73) for multiplexing a plurality of digital signals into a multiplexed signal, the multiplexed signal being supplied to said code spreading means as said data, whereby said code spreading means spreads the multiplexed signal by using the selected spreading code to produce the wide-band signal.

6. A time division spread code transmission control apparatus as claimed in claim 4, wherein said spreading code producing means comprises:

an original spreading code generator (75) for generating the original spreading code (f(n)); an additional spreading code generator (77) for generating the additional spreading code; and a selector (79), connected to said original spreading code generator and said additional spreading code generator, for selecting one of the original spreading code and the additional spreading code as the selected spreading code, said selector selecting the original spreading code as the selected spreading code when data to be transmitted is present, said selector selecting the additional spreading code as the selected spreading code when data to be transmitted is absent.

7. A time division spread code transmission control apparatus as claimed in claim 6, wherein the additional spreading code ($\overline{f(n)}$) is a code obtained by inverting the original spreading code (f(n))

8. A time division spread code transmission control apparatus as claimed in claim 7, wherein said additional spreading code generator comprises an inverter (77), connected to said original spreading code generator, for inverting the original spreading code to produce an inverted spreading code as the additional spreading code.

9. A time division spread code transmission control apparatus as claimed in claim 4, wherein said time division spread code transmission control apparatus further comprises:

amplifying means (93), connected to said code spreading means, for amplifying the wide-band signal by a variable gain to produce an amplified signal; and power control means (87), connected to said amplifying means, for controlling the variable gain so that the variable gain is equal to a predetermined gain when data to be transmitted is present and so that the variable gain is equal to zero when data to be transmitted is absent.

10. A time division spread code transmission control apparatus as claimed in claim 1, wherein said spreading means spreads data by using a noninverted spreading code (f(n)) when data to be transmitted is present, said spreading means spreading data by using an inverted spreading code ($\overline{f(n)}$) into which the noninverted spreading code is inverted when data to be transmitted is absent.

11. A time division spread code transmission control apparatus as claimed in claim 10, wherein said spreading means comprises:

spreading code producing means (75, 77, 79) for producing one of the noninverted spreading code and the inverted spreading code as a selected spreading code, said spreading code producing means producing the noninverted spreading code as the selected spreading code when data to be transmitted is present, said spreading code producing means producing the inverted spreading code as the selected spreading code when data to be transmitted is absent; and code spreading means (81, 83, 85), connected to said spreading code producing means, for spreading data by using the selected spreading code to produce the wide-band signal.

12. A time division spread code transmission control apparatus as claimed in claim 11, wherein said spreading means further comprises multiplexing means (73) for multiplexing a plurality of digital signals into a multiplexed signal, the multiplexed signal being supplied to said code spreading means as said data, whereby said code spreading means spreads the multiplexed signal by using the selected spreading code to produce the wide-band signal.

13. A time division spread code transmission control apparatus as claimed in claim 11, wherein said spreading code producing means comprises:

a noninverted spreading code generator (75) for generating the noninverted spreading code; an inverter (77), connected to said noninverted spreading code generator, for inverting the noninverted spreading code to produce the inverted spreading code; and a selector (79), connected to said noninverted spreading code generator and said inverter, for selecting one of the noninverted spreading code and the inverted spreading code as the selected spreading code, said selector selecting the noninverted spreading code as the selected spreading code when data to be transmitted is present, said selector selecting the inverted spreading code as the selected spreading code when data to be transmitted is absent.

14. A time division spread code transmission control apparatus as claimed in claim 11, wherein said time division spread code transmission control apparatus further comprises:

amplifying means (93), connected to said code spreading means, for amplifying the wide-band signal by a variable gain to produce an amplified signal; and
power control means (87), connected to said amplifying means, for controlling the variable gain so that the variable gain is equal to a predetermined gain when data to be transmitted is present and so that the variable gain is equal to zero when data to be transmitted is absent.

15. A time division spread code transmission control apparatus as claimed in claim 1, wherein said spreading means spreads data by using a first spreading code ($f_1(n)$) when data to be transmitted is present, said spreading means spreading data by using a second spread code ($f_2(n)$) orthogonal or pseudo-orthogonal to the first spread code when data to be transmitted is absent.

16. A time division spread code transmission control apparatus as claimed in claim 15, wherein said spreading means comprises:

spreading code producing means (75-1, 75-2, 79) for producing one of the first and the second spreading codes as a selected spreading code, said spreading code producing means producing the first spreading code as the selected spreading code when data to be transmitted is present, said spreading code producing means producing the second spreading code as the selected spreading code when data to be transmitted is absent; and
code spreading means (81, 83, 85), connected to said spreading code producing means, for spreading data by using the selected spreading code to produce the wide-band signal.

17. A time division spread code transmission control apparatus as claimed in claim 16, wherein said spreading means further comprises multiplexing means (73) for multiplexing a plurality of digital signals into a multiplexed signal, the multiplexed signal being supplied to said code spreading means as said data, whereby said code spreading means spreads the multiplexed signal by using the selected spreading code to produce the wide-band signal.

18. A time division spread code transmission control apparatus as claimed in claim 16, wherein said spreading code producing means comprises:

a first spreading code generator (75-1) for generating the first spreading code;
a second spreading code generator (75-2) for generating the second spreading code; and
a selector (79), connected to said first and said second spreading code generators, for selecting one of the first and the second spreading codes as the selected spreading code, said selector selecting the first spreading code as the selected spreading code when data to be transmitted is present, said selector selecting the second spreading code as the selected spreading code when data to be transmitted is absent.

19. A time division spread code transmission control apparatus as claimed in claim 16, wherein said time division spread code transmission control apparatus further comprises:

amplifying means (93), connected to said code spreading means, for amplifying the wide-band signal by a variable gain to produce an amplified signal; and
power control means (87), connected to said amplifying means, for controlling the variable gain so that the variable gain is equal to a predetermined gain when data to be transmitted is present and so that the variable gain is equal to zero when data to be transmitted is absent.

20. A method of transmitting data from a base station (61, 62) to a mobile station (65) laid in a predetermined area assigned by a cellular communication system, said cellular communication system using, as a multiple access, both of a code division multiple access where spread spectrum is carried out by using a spreading code and a time division multiplex access where a plurality of communication channels are assigned to time slots into which a time is divided, characterized in that said method comprising the step of spreading (71, 73, 75, 77, 75-1, 75-2, 79, 81, 83, 85), in said mobile station, data by using different spreading codes in accordance with the presence or absence of data to produce a wide-band signal.

21. A method of transmitting data from a base station (61, 62) to a mobile station (65) laid in a predetermined area assigned by a cellular communication system, said cellular communication system using, as a multiple access, both of a code division multiple access where spread spectrum is carried out by using a spreading code and a time division multiplex access where a plurality of communication channels are assigned to time slots into which a time is divided, characterized in that said method comprising the steps of:

spreading (71, 73, 75, 77, 79, 81, 83, 85), in said base station, data by using an original spreading code (f(n)) assigned to said mobile station when data to be transmitted is present and spreading data by using an additional spreading code ($\overline{f(n)}$) orthogonal to the original spreading code when data to be transmitted is absent to produce a wide-band signal; and

inverse spreading, in said mobile station, the wide-band signal by using the original spreading code (f(n)) to reproduce the data.

22. A method of transmitting data from a base station (61, 62) to a mobile station (65) laid in a predetermined area assigned by a cellular communication system, said cellular communication system using, as a multiple access, both of a code division multiple access where spread spectrum is carried out by using a spreading code and a time division multiplex access where a plurality of communication channels are assigned to time slots into which a time is divided, characterized in that said method comprising the steps of:

spreading (71, 73, 75, 77, 79, 81, 83, 85), in said base station, data by using a noninverted spreading code (f(n)) assigned with said mobile station when data to be transmitted is present and spreading data by using an inverted spreading code ($\overline{f(n)}$) into which the noninverted spreading code is inverted when data to be transmitted is absent to produce a wide-band signal; and
inverse spreading, in said mobile station, the wide-band signal by using the noninverted spreading code (f(n)) to reproduce the data.

23. A method of transmitting data from a base station (61, 62) to a mobile station (65) laid in a predetermined area assigned by a cellular communication system, said cellular communication system using, as a multiple access, both of a code division multiple access where spread spectrum is carried out by using a spreading code and a time division multiplex access where a plurality of communication channels are assigned to time slots into which a time is divided, characterized in that said method comprising the steps of:

spreading (71, 73, 75-1, 75-2, 79, 81, 83, 85), in said base station, data by using a first spreading code (f₁(n)) assigned to said mobile station when data to be transmitted is present and spreading data by using a second spread code (f₂(n)) orthogonal or pseudo-orthogonal to the first spread code when data to be transmitted is absent to produce a wide-band signal; and

inverse spreading, in said mobile station, the wide-band signal by using the first spreading code (f₁(n)) to reproduce the data.

24. A cellular communication system including a base station (61, 62) and a mobile station (65) laid in a predetermined area assigned by said cellular communication system, said base station transmitting data to said mobile station, said cellular communication system using, as a multiple access, both of a code division multiple access where spread spectrum is carried out by using a spreading code and a time division multiplex access where a plurality of communication channels are assigned to time slots into which a time is divided, characterized in that said base station comprising spreading means (71, 73, 75, 77, 75-1, 75-2, 79, 81, 83, 85) for spreading data by using different spreading codes in accordance with the presence or absence of data to produce a wide-band signal.

25. A cellular communication system including a base station (61, 62) and a mobile station (65) laid in a predetermined area assigned by said cellular communication system, said base station transmitting data to said mobile station, said cellular communication system using, as a multiple access, both of a code division multiple access where spread spectrum is carried out by using a spreading code and a time division multiplex access where a plurality of communication channels are assigned to time slots into which a time is divided, characterized in that:

said base station comprising spreading means (71, 73, 75, 77, 79, 81, 83, 85) for spreading data by using an original spreading code (f(n)) assigned to said mobile station when data to be transmitted is present, said spreading means spreading data by using an additional spreading code ($\overline{f(n)}$) orthogonal to the original spreading code when data to be transmitted is absent, said spreading means producing a wide-band signal,
said mobile station comprising inverse spreading means for inverse spreading the wide-band signal by using the original spreading code (f(n)) to reproduce the data.

26. A cellular communication system including a base station (61, 62) and a mobile station (65) laid in a predetermined area assigned by said cellular communication system, said base station transmitting data to said mobile station, said cellular communication system using, as a multiple access, both of a code division multiple access where spread spectrum is carried out by using a spreading code and a time division multiplex access where a plurality of communication channels are assigned to time slots into which a time is divided, characterized in that:

said base station comprising spreading means (71, 73, 75, 77, 79, 81, 83, 85) for spreading data by using a noninverted spreading code (f(n)) assigned with said mobile station when data to be transmitted is present, said spreading means spreading data by using an inverted spreading code $(\overline{f(n)})$ into which the noninverted spreading code is inverted when data to be transmitted is absent, said spreading means producing a wide-band signal, said mobile station comprising inverse spreading means for inverse spreading the wide-band signal by using the noninverted spreading code (f(n) to reproduce the data.

27. A cellular communication system including a base station (61, 62) and a mobile station (65) laid in a predetermined area assigned by said cellular communication system, said base station transmitting data to said mobile station, said cellular communication system using, as a multiple access, both of a code division multiple access where spread spectrum is carried out by using a spreading code and a time division multiplex access where a plurality of communication channels are assigned to time slots into which a time is divided, characterized in that:

said base station comprising spreading means (71, 73, 75-1, 75-2, 79, 81, 83, 85) for spreading data by using a first spreading code $(f_1(n))$ assigned to said mobile station when data to be transmitted is present, said spreading means spreading data by using a second spread code $(f_2(n))$ orthogonal or pseudo-orthogonal to the first spread code when data to be transmitted is absent, said spreading means producing a wide-band signal, said mobile station comprising inverse spreading means for inverse spreading the wide-band signal by using the first spreading code $(f_1(n))$ to reproduce the data.

FIG. 1    PRIOR ART

EP 0 936 767 A2

FIG. 2

EP 0 936 767 A2

FIG. 3A
PRIOR ART   61 OUTPUT

POWER

| CH1 f(n) | CH2 f(n) | CH1 f(n) | CH2 f(n) | CH1 f(n) |

t

FIG. 3B
PRIOR ART   62 OUTPUT

POWER

CH1 f(n)    CH1 f(n)    CH1 f(n)

f(n)

t

FIG. 3C
PRIOR ART   DECODER INPUT

f(n)

POWER

CH1 f(n)   CH2 f(n)   CH1 f(n)   CH2 f(n)   CH1 f(n)

t

FIG. 3D
PRIOR ART   DECODER OUTPUT

f(n)

POWER

CH1 f(n)   CH2 f(n)   CH1 f(n)   CH2 f(n)   CH1 f(n)

t

16

FIG.4

EP 0 936 767 A2

FIG.5A  61 OUTPUT

FIG.5B  62 OUTPUT

FIG.5C  DECODER INPUT

FIG.5D  DECODER OUTPUT

EP 0 936 767 A2

FIG.6

EP 0 936 767 A2

**FIG.7A** 61 OUTPUT

POWER

| CH1 $f_1(n)$ | CH2 $f_1(n)$ | CH1 $f_1(n)$ | CH2 $f_1(n)$ | CH1 $f_1(n)$ |

t

**FIG.7B** 62 OUTPUT

POWER

CH1 $f_1(n)$ · CH1 $f_1(n)$ · CH1 $f_1(n)$

$f_2(n)$

t

**FIG.7C** DECODER INPUT

$f_2(n)$

POWER

CH1 $f_1(n)$ · CH2 $f_1(n)$ · CH1 $f_1(n)$ · CH2 $f_1(n)$ · CH1 $f_1(n)$

t

**FIG.7D** DECODER OUTPUT

POWER

CH1 $f_1(n)$ · CH2 $f_1(n)$ · CH1 $f_1(n)$ · CH2 $f_1(n)$ · CH1 $f_1(n)$

t